# NEUE EUROPÄISCHE PATENTSCHRIFT

(11) **EP 2 178 648 B2**
(45) Veröffentlichungstag und Bekanntmachung des Hinweises auf die Entscheidung über den Einspruch: **16.10.2019**
(45) Hinweis auf die Patenterteilung: 14.09.2016
(21) Anmeldenummer: 08784720.8
(22) Anmeldetag: 11.07.2008
(51) Int. Cl.: B05B 5/04

(54) **VERFAHREN ZUR PROZESSDIAGNOSE UND ROTATIONSZERSTÄUBERANORDNUNG**
METHOD FOR PROCESS DIAGNOSIS AND ROTARY ATOMIZER ARRANGEMENT
PROCÉDÉ DE DIAGNOSTIC DE PROCESSUS ET DISPOSITIF D'ATOMISATION ROTATIF

(30) Priorität: 20.07.2007 DE 102007033892
(43) Veröffentlichungstag der Anmeldung: 28.04.2010
(73) Patentinhaber: Dürr Systems AG, 74321 Bietigheim-Bissingen (DE)
(72) Erfinder: BAUMANN, Michael, 74223 Flein (DE); BLOCK, Torsten, 71154 Nufringen (DE); HAAS, Jürgen, 75438 Knittlingen (DE); HERRE, Frank, 71739 Oberriexingen (DE); FREY, Marcus, 71263 Weil der Stadt (DE); MEISSNER, Alexander, 70193 Stuttgart (DE); NOLTE, Hans-Jürgen, 74354 Besigheim (DE); SEIZ, Bernhard, 74348 Lauffen a.N. (DE)
(74) Vertreter: Beier, Ralph
(86) Internationale Anmeldenummer: PCT/EP2008/005681
(87) Internationale Veröffentlichungsnummer: WO 2009/012902

(56) Entgegenhaltungen:
- EP-A- 1 403 746
- WO-A1-2005/110613
- WO-A1-2006/128561
- WO-A1-2007/006325
- WO-A1-2007/047143
- DE-A1- 2 030 862
- DE-A1- 3 002 206
- DE-A1- 3 101 193
- DE-A1- 4 123 219
- DE-A1- 10 049 506
- DE-A1- 19 856 527
- DE-U1- 8 404 449
- DE-U1- 9 013 486
- US-A- 5 629 870
- US-A1- 2001 042 400
- US-A1- 2005 067 991
- US-A1- 2006 192 508
- US-B2- 6 742 718

## Beschreibung

Die Erfindung betrifft ein Verfahren zur Prozessdiagnose bei der Beschichtung, insbesondere Lackierung von Werkstücken wie beispielsweise Fahrzeugkarossen oder deren Teilen und eine entsprechende Rotationszerstäuberanordnung gemäß dem Oberbegriff der unabhängigen Patentansprüche. Die Zerstäuberanordnung kann insbesondere aus einem elektrostatischen Rotationszerstäuber oder auch aus dem Zerstäuber und dem Vorderarm eines Lackierroboters bestehen, an dem der Rotationszerstäuber über das übliche Handgelenk angeordnet ist.

Elektrostatische Rotationszerstäuber sind allgemein bekannt. In mit Direktaufladung des Beschichtungsmaterials arbeitenden Zerstäubern wird üblicherweise der elektrisch leitende Teil des Zerstäubers unter Hochspannung gesetzt, so dass das Beschichtungsmaterial von einer alle elektrisch leitfähigen Teile wie Glockenteller, Farbrohr, Verschraubungen usw., mit denen es in Berührung kommt, enthaltenden Elektrodeneinrichtung aufgeladen werden kann. Bekanntlich ist aber auch eine Außenaufladung des Beschichtungsmaterials mit externen Elektroden möglich.

Die bisher üblichen Rotationszerstäuber enthalten eine pneumatische Antriebsturbine für den das Absprühelement bildenden Glockenteller, deren Drehzahl z. B. durch optische Abtastung rotierender Markierungen und Übertragung der Abtastimpulse über Lichtwellenleiter gemessen und von einem Regelkreis durch Steuerung der Antriebsluft konstant gehalten werden kann (DE 43 06 800 C2 und EP 1 388 372 B1), wobei allerdings das Problem besteht, dass zu Beginn eines Beschichtungsvorgangs beim Öffnen des den Ausfluss des Beschichtungsmaterials aus dem Zerstäuber steuernden üblichen Hauptnadelventils wegen der Trägheit des Regelsystems zunächst die Drehzahl relativ stark abfallen kann, was zu Beschichtungsfehlern führt und allenfalls durch aufwändige Zusatzmaßnahmen vermieden werden kann.

Bei dem Hauptnadelventil ist es erforderlich, zur steuerungstechnischen Kompensation von Schaltfehlern wie zeitliche Verzögerungen oder Verschiebungen beispielsweise durch Bauteilverschleiß, die insbesondere bei schnellen Bewegungen eines Lackierroboters zu Beschichtungsfehlern führen, die Schaltzeiten zu überwachen. Zu diesem Zweck ist es bekannt, mit opto-elektronischen Sensoren und Lichtwellenleitern die Schaltstellungen zu erfassen und auszuwerten (EP 1 245 291 B1). Lichtwellenleiter übertragen aber die Sensorsignale wegen störender oder gestörter Schnittstellen nicht immer zuverlässig, haben aufgrund ihrer ständigen Biegebewegungen in einem Lackierroboter nur eine sehr begrenzte Lebensdauer und können aufgrund ihrer Anordnung in dem Roboter überdies nur mit erheblichem Aufwand ausgewechselt werden. Auch kann die Signalauswertung in manchen Fällen für eine optimale Fehlerkompensation zu träge sein.

Generell besteht darüber hinaus das Problem, dass verschiedene Prozessfehler und sonstige Fehlerzustände im Beschichtungsbetrieb mangels entsprechender Sensorik überhaupt nicht festgestellt werden. Typische Fehler sind beispielsweise die Montage eines falschen Glockentellers oder das vollständige Fehlen des Glockentellers, Berührungen zwischen dem Glockenteller und dem Werkstück oder anderen Umgebungsgegenständen, Unwucht des Glockentellers, Lagerverschleiß oder falsche oder ganz fehlende Lagerluft der in Rotationszerstäubern üblicherweise vorgesehenen Luftlager der Glockentellerwelle sowie falscher Volumenstrom des Beschichtungsmaterials oder Veränderungen seiner Viskosität und anderer Eigenschaften.

Es-ist an sich schon bekannt, die in der Praxis zur Zeit allgemein übliche Luftturbine durch einen elektrischen Antriebsmotor für die luftgelagerte Glockentellerwelle eines Rotationszerstäubers zu ersetzen (WO 2005/110613). Die oben beschriebenen Probleme werden bei dem bekannten Rotationszerstäuber aber nicht gelöst. Außerdem besteht bei dem bekannten Rotationszerstäuber das oben schon erwähnte Problem, dass es bei elektrostatischer Beschichtung notwendig sein kann, den gesamten Rotationszerstäuber unter Hochspannung in der Größenordnung von 100 kV zu setzen. Ohne zusätzliche Maßnahmen können ein elektrischer Antriebsmotor und dessen Steuersystem in einem elektrostatischen Rotationszerstäuber mit Direktaufladung des Beschichtungsmaterials nicht eingesetzt werden.

Die bei einem elektrostatischen Rotationszerstäuber für einen elektromotorischen Glockentellerantrieb und für die Signalübertragung erforderlichen Potenzialtrennmaßnahmen sind in der deutschen Patentanmeldung 10 2007 004 819.1 vom 31.01.2007 beschrieben.

Zum Stand der Technik ist auch hinzuweisen auf EP 1 403 746 A, DE 31 01 193 A1, DE 30 02 206 A1, DE 100 49 506 A1, US 5 629 870 A, US 2006/192508 A1 und US 2005/067991 A1. Die letztgenannten Druckschriften offenbaren jedoch allgemein elektrische Antriebe ohne einen Bezug zu dem einschlägigen technischen Gebiet der Rotationszerstäuber.

Aus WO 2007/006325 A1 ist ein Verfahren bzw. eine Vorrichtung gemäß dem Oberbegriff der Patentansprüche 1 bzw. 8 bekannt. Allerdings ist es hierbei nicht möglich, den Volumenstrom des Beschichtungsmaterials zu kontrollieren.

Ausgehend insbesondere von den bekannten Rotationszerstäubern mit den bisher üblichen Luftturbinen liegt der Erfindung die Aufgabe zugrunde, ein Verfahren zur Prozessdiagnose und/oder zur hochdynamischen Regelung von Parametern des Beschichtungsprozesses oder des Motors und eine entsprechende Rotationszerstäuberanordnung anzugeben, mit denen möglichst schnell und zuverlässig einer oder mehrere der oben erwähnten Fehlerzustände erkannt werden können, so dass rechtzeitig die erforderlichen Gegenmaßnahmen möglich sind.

Diese Aufgabe wird durch die Merkmale der Patentansprüche gelöst.

Die Erfindung beruht auf der Erkenntnis, dass bei Einsatz eines elektrischen Antriebsmotors für den vorzugsweise über eine Antriebswelle angetriebenen Glockenteller eines Rotationszerstäubers auf einfache Weise aus den Motorkennwerten Fehlerzustände bei der Beschichtung von Werkstücken extrem schnell und zuverlässig feststellbar sind, so dass sie korrigiert werden können. Die Auswertung der Motorkennwerte kann zweckmäßig mit einem elektronischen Steuersystem des Motors selbst oder mit einem anderen Auswertesystem erfolgen. Das hier beschriebene Verfahren kann auch zur hochdynamischen Regelung von Prozessparametern verschiedenster Art und Parametern des Motors angewendet werden. In vielen Fällen ist die Feststellung der Fehlerzustände ohne den Einsatz von Sensoren außerhalb des Motors und seines eigenen Steuersystems möglich. In anderen Fällen kann die Auswertung von Motorkenngrößen mit externen Sensoren erfolgen oder durch diese unterstützt werden. Beispielsweise können mit externen Beschleunigungssensoren unzulässige Roboterbewegungen festgestellt und korrigiert oder durch Änderung von Prozessparametern kompensiert werden.

Die jeweils interessierenden Parameter können bei dem hier beschriebenen Verfahren bzw. der entsprechenden Zerstäuberanordnung während eines Beschichtungs- oder Absprühvorgangs bestimmt und analysiert werden, insbesondere auch während des normalen Lackier- oder Beschichtungsbetriebs oder jedenfalls bei Rotation des Absprühelements mit Drehzahlen, mit denen es auch während des Betriebs beim Absprühen des Beschichtungsmaterials rotiert. Rotationszerstäuber für Pulverlacke arbeiten typisch mit Drehzahlen von etwa 3000 bis 12000/min, doch eignet sich die Erfindung insbesondere auch für Hochrotationszerstäuber mit Drehzahlen, die typisch zwischen 5000 und 80000/min liegen können.

Ferner eignet sich die Erfindung insbesondere für elektrostatische Rotationszerstäuber, die zur Direkt- oder Außenaufladung des abgesprühten Lacks oder sonstigen Beschichtungsmaterials an Hochspannung beispielsweise in der Größenordnung von 100 kV angeschlossen sind.

Bei den erfindungsgemäß zu bestimmenden und zu analysierenden Parametern kann es sich typisch um Größen handeln, die im normalen Beschichtungsbetrieb von Sollwerten oder Normalzuständen abweichen können, während andere Störungen (wie z.B. Kollisionen des rotierenden Absprühelements mit der zu beschichtenden Oberfläche) auf andere Weise festgestellt oder vermieden werden können.

Die Korrektur festgestellter Fehler kann insbesondere bei sich stetig ändernden Parametern des Absprühprozesses oder des Glockentellerantriebssystems davon abhängig gemacht werden, ob ein als noch zulässig betrachteter Grenzwert überschritten wird. Generell kann bei Feststellung von Fehlern ein Alarmsignal erzeugt und/oder automatisch in den überwachten Prozess zur Durchführung der jeweils erforderlichen Maßnahmen eingegriffen werden.

Typische erfindungsgemäß auswertbare Kenngrößen des elektrischen Antriebsmotors sind die Größe und/oder der Verlauf seines Stroms, seiner elektrischen Leistung, seines Dreh- oder Lastmoments, seiner positiven oder negativen Beschleunigung und/oder seiner Drehzahl, während als Prozess- oder Antriebsparameter insbesondere die Belastung des Antriebssystems durch den Glockenteller, das diesem zugeführte Beschichtungsmaterial, Unwucht der rotierenden Elemente und/oder Lagerung der Antriebswelle analysiert werden können.

Beispielsweise lässt sich die Tatsache nutzen, dass bei falschem, also z.B. leichterem oder schwererem Glockenteller oder bei fehlendem Glockenteller andere Motormomente wirken und ein anderer Leistungsbedarf besteht als bei Verwendung des richtigen Glockentellers. Aufgrund des unterschiedlichen Drehmomentbedarfs und des unterschiedlichen Beschleunigungsverhaltens lässt sich automatisch auf die sich unterscheidenden Massenträgheitsmomente von Glockentellern schließen, welche aus verschiedenen Werkstoffen wie beispielsweise aus Aluminium, Stahl, Titan oder Kunststoff usw. bestehen können. Weiterhin lassen sich auch die unterschiedlichen Glockentellertypen, welche durch ihre spezifischen geometrischen Abmessungen und Merkmale gekennzeichnet sind ermitteln. Aufgrund der Auswertung kann dann der richtige Glockenteller gewählt und montiert werden.

Höherer Drehmoment- oder Leistungsbedarf oder ein Absinken der Drehzahl kann auch auf zunehmenden Verschleiß der Lager der Antriebswelle zurückzuführen sein, wofür nicht nur Luftlager in Betracht kommen, sondern auch Wälz- und beliebige sonstige Lagerkonstruktionen. Wenn eine unzulässig hohem Lagerverschleiß entsprechende Änderung der betreffenden Kenngröße feststellt wird, kann z.B. die Lagerung eventuell mit sonstigen Bestandteilen des Zerstäubers ausgewechselt oder repariert werden, bevor noch größere Schäden auftreten.

Besonders zweckmäßig kann bei Luftlagern auch eine Kontrolle der Lagerluft sein. Zu diesem Zweck besteht beispielsweise die Möglichkeit, zunächst das Motormoment im Stillstand zu ermitteln und dann nach vorzugsweise langsamem Start des Motors in Abhängigkeit von der Motordrehzahl und durch Auswertung der Motorkenngrößen den Luftvolumenstrom zu ermitteln. Wichtig ist hier insbesondere die ohne sonstige Sensoren mögliche Feststellung, ob beim Starten des Motors überhaupt Lagerluft fließt. Fehlende Lagerluft würde aufgrund des Reibschlusses im Lagerdurch drastischen Anstieg des notwendigen Drehmoments des Motors festgestellt, so dass der Motor abgeschaltet werden kann, um sonst unvermeidbare Schäden des Lagers zu vermeiden. Die Kontrolle der Lagerluft ist aber auch während des Betriebs bei laufendem Motor sinnvoll.

Eine in der Praxis wichtige andere Möglichkeit besteht darin, durch Auswertung der Motorkenngrößen eventuelle Unwucht des Glockentellers oder andere Exzentrizitäten der Antriebwelle zu messen, um bei Feststellung unzulässiger Werte geeignete Gegenmaßnahmen ergreifen zu können und somit Schäden der Lagerung oder beispielsweise bei blockierender Lagerung auch ein Lösen und Abfliegen des rotierenden Glockentellers von der Antriebswelle zu verhindern.

Eine andere wichtige Möglichkeit ist die Kontrolle des Beschichtungsmaterials. Durch Auswertung des Beschleunigungs- und/oder Bremsverhaltens des Antriebsmotors kann der Volumenstrom des Beschichtungsmaterials kontrolliert werden, insbesondere mittels des linearen Anstiegs der Beschleunigungs- oder Bremskräfte (Beschleunigungs- und Bremsrampen). Durch Leistungs- oder Drehmomenterfassung oder durch die Auswirkungen auf die Drehzahl können Eigenschaften des zu applizierenden Lacks oder sonstigen Beschichtungsmaterials und deren Änderungen festgestellt werden wie z.B. Viskosität, Dichte, Adhäsion, Kohäsion usw.

Es kann auch sinnvoll sein, das Drehmomentverhalten des Motors nicht oder nicht nur im normalen Betrieb, sondern stattdessen ohne das Absprühen von Beschichtungsmaterial auszuwerten und hierbei die Belastung des Motors durch den Glockenteller durch ein elektrisch beispielsweise nach dem Wirbelstromprinzip oder auf sonstige Weise erzeugtes künstliches Gegenmoment zu simulieren.

Generell kann durch die Erfindung beispielsweise bei der Innen- und Außenlackierung von Fahrzeugkarossen die Qualität und Präzision der Applikation erheblich verbessert werden. Ein Grund hierfür ist die Möglichkeit, Drehzahländerungen mit dem elektronischen Steuersystem des elektrischen Motors wesentlich schneller messen und korrigieren zu können als mit dem opto-elektronisch und pneumatisch arbeitenden Drehzahlregelkreis der üblichen Luftturbinen, so dass es z.B. beim Öffnen des Hauptnadelventils nicht mehr wie bisher zu einem nennenswerten Drehzahlabfall und entsprechenden Beschichtungsfehlern kommen kann.

Darüber hinaus kann auch die Kompensation von Schaltzeitänderungen des Hauptnadelventils durch die Erfindung wesentlich verbessert werden, da die Auswertung des den Schaltzeiten entsprechenden Drehzahlverlaufs oder anderer Motorkennwerte erheblich dynamischer und genauer ist als die oben erwähnte bekannte Methode mit opto-elektronischer Hauptnadelabfrage. Gemäß einem anderen Aspekt ermöglicht die erfindungsgemäße Schaltzeitanalyse eine Kontrolle von aus zwei oder mehr Komponenten gemischten Beschichtungsmaterialien wie namentlich der 2K-Lacke, deren aus Stammlack und Härter bestehende Komponenten von jeweiligen Dosiervorrichtungen zu einer Mischeinrichtung vor oder in dem Zerstäuber gefördert werden. Hierbei ist es wichtig, dass die beiden Dosiervorrichtungen jeweils zu ihren richtigen Zeiten gestartet werden. Erfindungsgemäß kann durch Auswertung beispielsweise des Verlaufs der Motormomente die Belastung des Motors durch jede der beiden Komponenten zeitlich bestimmt werden, so dass Fehler durch zeitliche Verschiebung der Steuersignale der Dosiervorrichtungen korrigiert werden können. Hierbei könnten aufgrund der Motorkennwerte auch das vollständige Fehlen einer der beiden Komponenten oder falsche Viskosität oder andere Materialeigenschaften jeder der beiden Komponenten festgestellt werden. Auch inhomogene oder unzulängliche Mischung könnte festgestellt werden, da der Motor dann (z. B. bei Verstopfung des Mischers) anders belastet würde als bei richtiger Mischung.

Die Auswertung der Motorkenngrößen kann zweckmäßig von einem elektronischen Prozessor, beispielsweise einem zu dem Motorsteuersystem gehörenden Mikroprozessor durchgeführt werden, ggf. durch Vergleich des von der Auswerteschaltung ermittelten Kenngrößenverlaufs mit in dem Prozessor oder in einem beispielsweise externen Steuersystem gespeicherten Randbedingungen in Form von Soll-, Referenz- oder Kalibrierkurven und Erzeugung entsprechender Abweichungssignale im Fall von Fehlerzuständen. Hierbei kann genau festgestellt werden, welche Änderungen von Motorkenngrößen auf welche Ursachen oder Parameter des Absprühprozesses oder Glockentellerantriebs zurückzuführen sind. Beispielsweise haben Viskositätsänderungen des Beschichtungsmaterials deutlich andere Auswirkungen auf das Motorverhalten als die sprunghafte Belastung durch das Beschichtungsmaterial beim Öffnen des Hauptnadelventils, so dass die jeweiligen Ursachen der Kenngrößenänderungen problemlos diskriminiert werden können.

Für die Erfindung geeignete Elektromotoren, die den Glockenteller eines Hochrotationszerstäubers mit den erforderlichen Drehzahlen von mindestens 3000 und in der Regel mehr als 10000/min bis z.B. 80000/min antreiben können, sind in verschiedenen Typen im Handel erhältlich. Ein für diese Motoren verwendbares hochdynamisches Antriebssteuersystem, das speziell für die Auswertung von Kenngrößen konzipiert ist und mit dem die erfindungsgemäße Kenngrößenauswertung durchgeführt werden kann, ist ebenfalls im Handel erhältlich, insbesondere bei der Aradex AG, D-73547 Lorch, deren Systeme bisher allerdings hauptsächlich für die spanende Bearbeitung von Werkstücken und andere Werkzeugmaschinen und insbesondere für die hochdynamische Servoantriebstechnik eingesetzt werden.

An dem bevorzugten Beispiel einer elektrostatischen Rotationszerstäuberanordnung mit einer eine Hochspannungs-Isolationseinrichtung zur Potenzialtrennung enthaltenden Transformatoranordnung und galvanisch getrennter Signalübertragung zwischen dem auf Hochspannungspotenzial liegenden Bereich des Zerstäubers und einem auf niedrigem oder Erdpotenzial liegenden Bereich, wie sie an sich in der erwähnten Patentanmeldung DE 10 2007 004 819.1 beschrieben ist, wird die Erfindung näher erläutert. In der Zeichnung zeigen
- Fig. 1: die erfindungsgemäße Zerstäuberanordnung; und
- Fig. 2: eine erfindungsgemäß auswertbare Messkurve der Motorleistung; und
- Fig. 3: schematisch den erfindungsgemäß auswertbaren zeitlichen Verlauf des Motormoments und der Drehzahl in Abhängigkeit von dem Materialfluss.

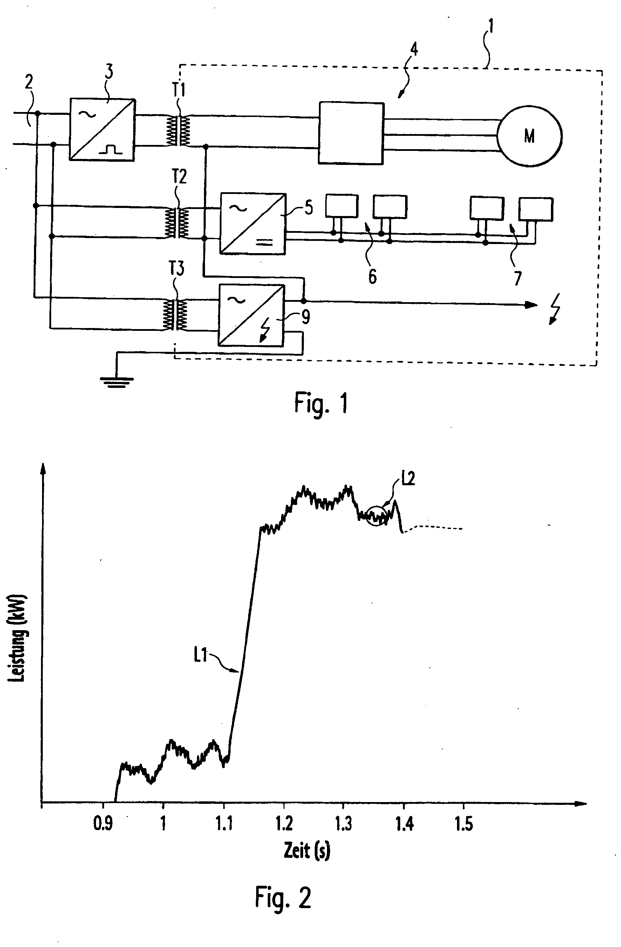

In Fig. 1 befinden sich in dem Bereich 1 die im Betrieb auf Hochspannungspotenzial liegenden Bauteile einer elektrostatischen Rotationszerstäuberanordnung, nämlich des eigentlichen Zerstäubers oder einer Anordnung aus dem Zerstäuber, einem Handgelenk und dem im betrachteten Fall mit einigen Elementen ebenfalls auf Hochspannung liegenden Vorderarm eines Beschichtungsroboters. Der Vorderarm kann in an sich üblicher Weise aus Isolierwerkstoff gefertigt sein. Bis auf die Primärkreise der nachfolgend beschriebenen Transformatoranordnung können alle betrachteten Bauteile in dem Bereich 1 auf dem Hochspannungspotenzial liegen.

Zur elektrischen Versorgung dieses Bereichs 1 führt eine zwei- oder mehrpolige externe Versorgungsleitungsanordnung 2, die gemäß der Darstellung die zueinander parallelen Primärspulen der drei in an sich bekannter Weise als Trenntransformator mit Hochspannungisolationsstrecken (für mehr als 100 oder sogar mehr als 150 kV) ausgebildeten Transformatoren T1, T2 und T3 speist.

Die Wechselspannung der Leitungsanordnung 2 speist die Primärspule des ersten Transformators T1 über einen Wandler 3 mit Spannungsimpulsen, die auf der Sekundärseite die z.B. mit Frequenzregelung arbeitenden Antrieb 4 eines Synchron- oder sonstigen elektrischen Motors M speist, der anstelle der in Rotationszerstäubern sonst üblichen Luftturbine zum Antrieb der Zerstäuberglocke vorgesehen ist. Der Motor M kann von einem für den betrachteten Antriebszweck geeigneten bekannten Typ sein. Zum Speisen und Steuern des Motors M kann ein entsprechend angepasstes Steuer- und Auswertesystem (Antrieb 4) der eingangs erwähnten Aradex AG verwendet werden. Die Leistungsversorgung kann auch von einer z.B. digitalen Drehzahlsteuerung getrennt sein. Die Übertragungsfrequenz des Trenntransformators kann bekanntlich höher sein als die Frequenz, mit der der Motor M gespeist wird. Die Drehzahl von Rotationszerstäubern und somit des Motors M kann bis zu 100000/min oder mehr betragen.

Die Sekundärspule des zweiten Transformators T2 dient dagegen zur Leistungsversorgung von Bauelementen des Zerstäubers einschließlich Aktoren 6, Sensoren 7 und elektronischen Elementen, die sich in dem auf Hochspannung liegenden Bereich 1 befinden. Darstellungsgemäß kann die von dem Transformator T2 erzeugte Wechselspannung von einem Wandler 5 in eine Versorgungsgleichspannung umgewandelt werden. Typische Beispiele für die nur schematisch bei 6 und 7 angedeuteten Bauelemente sind Aktoren wie Steuer- und Antriebskreise für Ventile und Durchfluss-, Drehzahl- und sonstige -Regelkreise sowie Sensoren etwa für die Schaltstellung von Ventilen, Drehzahl, Durchflussmenge, Temperatur, Druck des Beschichtungsmaterials usw. Zu den hier betrachteten Aktoren können beispielsweise auch weitere elektrische oder andere Motoren etwa als Dosierpumpenantrieb zählen.

Für die Stromversorgung der Sensoren und Aktoren könnte bei anderen Ausführungsbeispielen auch eine in dem Motorantrieb 4 erzeugte Gleichspannung verwendet werden.

Die Sekundärspule des dritten Transformators T3 speist einen Wandler 9, der aus der Eingangswechselspannung die für die elektrostatische Aufladung des Beschichtungsmaterials benötigte Hochspannung erzeugt oder einen nicht dargestellten Hochspannungserzeuger des Zerstäubers versorgt. Die Hochspannung wird an die bei elektrostatischen Zerstäubern üblichen (nicht dargestellten) inneren oder externen Elektrodenanordnungen zur Direkt- bzw. Außenaufladung des Beschichtungsmaterials angelegt.

Außer den Sensoren und Aktoren des Zerstäubers können von der erfindungsgemäßen Transformatoranordnung auch außerhalb des Zerstäubers befindliche weitere Bauteile der Applikationstechnik gespeist werden, also auch Aktoren und Sensoren der Applikationstechnik, die sich an anderen Stellen der Beschichtungsmaschine befinden und dort auf Hochspannungspotenzial oder auch auf niedrigem oder Erdpotenzial liegen können. Hierzu gehören auch Bauteile, die je nach System auf Hochspannung oder Erdpotenzial liegen können wie z.B. Farbwechsler. Eventuell kann die Transformatoranordnung alle etwa auf einem Roboter vorhandenen applikationstechnischen Bauteile mit der von ihnen jeweils benötigten elektrischen Leistung versorgen.

Wenn man für die Transformatoranordnung relativ schwere Standardkonstruktionen als selbständige Bauteile im Zerstäuber oder im Roboterarm beispielsweise eines Lackierroboters montiert, könnten sie dessen Bewegungsdynamik beeinträchtigen. Es kann daher zweckmäßiger sein, den Transformator oder eine Transformatorspule konstruktiv so in den Körper des Roboterarms zu integrieren, dass er als tragendes Element des Roboterarms dient und dessen nötige Steifigkeit bewirkt oder zumindest dazu beiträgt. Infolge dessen wird durch den Transformator das Gesamtgewicht der Zerstäuberanordnung einschließlich Roboterarm nicht wesentlich erhöht.

Die Übertragung von Steuer- und Sensorsignalen zu und von den im Hochspannungsbereich 1 befindlichen Aktoren und Sensoren und dem Motorsteuersystem soll galvanisch getrennt erfolgen, um Beeinflussungen durch die Hochspannung auszuschließen. Hierfür kommen insbesondere die in der erwähnten DE 10 2007 004 819.1 beschriebenen Möglichkeiten optischer Übertragung oder einer Funkübertragung in Betracht.

Fig. 2 zeigt als typisches Beispiel für die erfindungsgemäße Auswertung einer Motorkenngröße den möglichen (nicht maßstabgetreuen) Verlauf der elektrischen Leistung des Motors M, wie er sich im Prinzip bei einem Lackiervorgang ergeben kann. Der relativ große Leistungssprung bei L1 kann sich beispielsweise bei Öffnen des Hauptnadelventils ergeben, also bei Belastung durch das Beschichtungsmaterial. Damit lassen sich u.a. schnell und genau die Schaltzeiten ermitteln, und durch den zeitlichen Verlauf und den Absolutwert des Leistungssprungs können weitere Prozessparameter analysiert werden. Die u.a. bei L2 erkennbaren relativ kleinen Leistungsschwingungen beispielsweise in der Größenordnung von 0,01 % sind dagegen typisch auf eine Exzentrizität des Glockentellers und/oder seiner Antriebswelle zurückzuführen. Die damit überlagerten etwas stärkeren Leistungsschwingungen (etwa 0,05 %) können auf mechanischen Wellenschwingungen beruhen. Die Ermittlung des Leistungsverlaufs kann erfindungsgemäß durch die Motorsteuerung selbst erfolgen, die in kürzester Zeit (weniger als 1 ms) entsprechende Auswertesignale erzeugen kann.

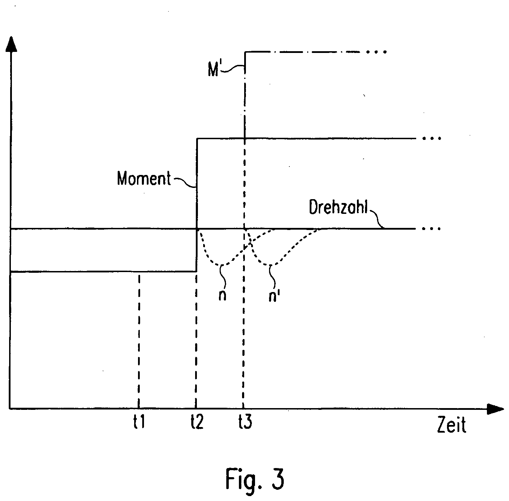

In Fig. 3 ist schematisch der Verlauf des Drehmoments des Motors M (Fig. 1) bei Beginn des Materialflusses und bei von dem Motor durch dessen Regelsystem konstant gehaltener Drehzahl dargestellt. Der Materialfluss beginnt bei Öffnen des Hauptnadelventils des Zerstäubers zum Zeitpunkt t2 aufgrund eines zur Zeit t1 erzeugten Steuersignals für das Hauptnadelventil und belastet den Motor, dessen Drehmoment sich infolge dessen erhöhen muss, um dem Absinken der Drehzahl entgegenzuwirken. Die Moment- und Drehzahlkurven haben in der Praxis selbstverständlich nicht den dargestellten geradlinigen Verlauf und die Drehzahl wird in der Regel geringfügig mehr oder weniger absinken, wie bei n angedeutet ist. Die Verzögerung zwischen der Zeit t1 des Steuersignals der Zeit t2, die durch den Anstieg des Drehmoments festgestellt wird ist die zu bestimmende Schaltzeit des Hauptnadelventils, die dann bei Abweichung von vorgegebenen Sollwerten korrigiert oder kompensiert werden kann.

Durch automatische Auswertung des Absolutwerts der Änderung des Drehmoments, bei dem betrachteten Beispiel also seiner Erhöhung zur Zeit t2 vorzugsweise durch das Motorsteuersystem selbst, lassen sich weitere Prozessparameter bestimmen wie z. B. richtiger oder falscher Druck des Beschichtungsmaterials beim Öffnen des Hauptnadelventils. Falscher Druck kann beispielsweise auf schadhafte Farbdruckregler oder Dosierpumpen zurückzuführen sein und könnte Lackierfehler zur Folge haben.

Das Motormoment kann sich beim Öffnen des Hauptnadelventils auch mehr als nur einmal ändern. Wenn beispielsweise bei 2K-Lacken der Motor durch die eine Komponente früher belastet wird als durch die zweite Komponente, kann sich das Motormoment zunächst zur Zeit t2 und dann bei t3 erneut erhöhen, wie bei M' und n' angedeutet ist. Der entsprechende Fehler kann dann korrigiert oder kompensiert werden. Auch in diesem Fall lassen sich durch die Absolutwerte der Änderungen weitere Prozessparameter analysieren wie hier insbesondere die Eigenschaften der Lackkomponenten.

Ähnlich wie der Momentverlauf des Motors kann auch dessen elektrische Leistung ausgewertet werden.

Weitere Auswertungsmöglichkeiten sind die Auswertung
- der Steigung (negativ und positiv) der sich jeweils ändernden Werte wie z. B. Moment, Drehzahl, Leistung, etc.;
- der absoluten Größe der Werteänderung von z. B. Moment, Drehzahl, Leistung, etc.; und
- der relativen Größe der Werteänderung von z. B. Moment, Drehzahl, Leistung etc.

## Patentansprüche

1. Verfahren zur Prozessdiagnose bei der Beschichtung von Werkstücken mit einem Rotationszerstäuber, dessen rotierendes Absprühelement von einem Motor (M) mit steuerbarer oder regelbarer Drehzahl angetrieben wird,
wobei Fehler des Absprühprozesses und/oder des Antriebssystems des Absprühelements festgestellt werden, mit den folgenden Schritten:
- Verwendung eines elektrischen Antriebsmotors (M) für das Absprühelement mit einem automatischen Steuersystem (4); und
- Analyse mindestens eines bestimmten Parameters des Absprühprozesses und/oder des Antriebssystems des Absprühelements durch Auswertung mindestens einer Kenngröße des Antriebsmotors,
**dadurch gekennzeichnet,**
**dass** durch Auswertung des Beschleunigungs- und/oder Bremsverhaltens des Antriebsmotors der Volumenstrom des Beschichtungsmaterials kontrolliert wird.

2. Verfahren nach Anspruch 1, **dadurch gekennzeichnet,**
a) **dass** als Kenngröße des Antriebsmotors die Größe und/oder der Verlauf seines Stroms, seiner elektrischen Leistung, seines Dreh- oder Lastmoments, seiner positiven oder negativen Beschleunigung und/oder seiner Drehzahl ausgewertet wird, und
b) **dass** als Prozess- oder Antriebsparameter die Belastung des Antriebssystems durch das Absprühelement, durch das Beschichtungsmaterial, durch Unwucht der rotierenden Elemente und/oder durch die Lagerung der Antriebswelle analysiert werden.

3. Verfahren nach einem der vorhergehenden Ansprüche,
**dadurch gekennzeichnet,**
a) **dass** durch Auswertung der elektrischen Kenngrößen, des Drehmoments und/oder der Drehzahl des Antriebsmotors Eigenschaften des Beschichtungsmaterials analysiert werden, oder
b) **dass** zur Kontrolle der durch ein Luftlager der Antriebswelle fließenden Lagerluft deren Volumenstrom durch Auswertung der Kenngröße, vorzugsweise der Größe und/oder des Verlaufs des Drehmoments und/oder der Drehzahl des Antriebsmotors ermittelt wird, oder
c) **dass** durch Auswertung mindestens einer Kenngröße des Antriebsmotors das Vorhandensein, das Trägheitsmoment, der Werkstoff und/oder der Typ des Absprühelements festgestellt wird, oder
d) **dass** die mindestens eine Kenngröße des Antriebsmotors von dessen elektronischem Steuersystem ausgewertet wird, oder
e) **dass** durch die Auswertung des Drehzahlverlaufs oder eines anderen Motorkennwerts die Schaltzeiten eines den Ausfluss des Beschichtungsmaterials aus dem Rotationszerstäuber steuernden Ventils ermittelt werden.

4. Verfahren nach einem der vorhergehenden Ansprüche,
**dadurch gekennzeichnet,**
**dass** die negative oder positive Steigung der sich ändernden Kenngröße des Motors und/oder die absolute und/oder relative Größe der Änderung ausgewertet werden.

5. Verfahren nach einem der vorhergehenden Ansprüche,
**dadurch gekennzeichnet, dass** ein durch die Auswertung einer Motorkenngröße festgestellter Fehler korrigiert wird, sobald er einen Grenzwert überschreitet.

6. Verfahren nach einem der vorhergehenden Ansprüche,
**dadurch gekennzeichnet, dass** mindestens ein Parameter, der während des Beschichtungsbetriebs und/oder während eines Absprühvorgangs und/oder bei Rotation des Absprühelements mit einer Drehzahl vorhanden ist, mit der das Absprühelement während des Beschichtungsbetriebs und/oder während eines Absprühvorgangs rotiert, durch Auswertung mindestens einer sich hierbei ergebenden Kenngröße des Antriebsmotors analysiert wird.

7. Verfahren nach einem der vorhergehenden Ansprüche,
**dadurch gekennzeichnet,**
a) **dass** die Drehzahl des Absprühelements, bei der die Bestimmung und/oder Analyse des mindestens einen Parameters durchgeführt wird, mehr als 3000/min oder mehr als 10000/min oder mehr als 15000/min beträgt, und
b) **dass** das Absprühelement und/oder andere Bestandteile oder Bauteile des Rotationszerstäubers bei der Bestimmung und/oder Analyse des mindestens einen Parameters auf einem Hochspannungspotential liegen.

8. Rotationszerstäuberanordnung für die Beschichtung von Werkstücken mit
a) einem drehbar gelagerten Absprühelement für das Beschichtungsmaterial,
b) einem elektrischen Antriebsmotor (M) für das Absprühelement und
c) einem automatischen Steuersystem (4) für den Antriebsmotor,
d) wobei eine in dem Motorsteuersystem (4) enthaltene oder mit ihm verbundene elektronische Auswerteeinrichtung vorgesehen ist, mit der mindestens eine Kenngröße des Antriebsmotors zur Analyse mindestens eines bestimmten Parameters des Absprühprozesses und/oder des Antriebssystems des Absprühelements auswertbar ist
**dadurch gekennzeichnet,**
e) **dass** die Auswerteeinrichtung durch Auswertung des Beschleunigungs- und/oder Bremsverhaltens des Antriebsmotors den Volumenstrom des Beschichtungsmaterials kontrolliert.

9. Rotationszerstäuberanordnung nach Anspruch 8, **dadurch gekennzeichnet,**
a) **dass** als Kenngröße des Antriebsmotors die Größe und/oder der Verlauf seines Stroms, seiner elektrischen Leistung, seines Dreh- oder Lastmoments, seiner positiven oder negativen Beschleunigung und/oder seiner Drehzahl ausgewertet wird, und
b) **dass** als Prozess- oder Antriebsparameter die Belastung des Antriebssystems durch das Absprühelement, durch das Beschichtungsmaterial, durch Unwucht der rotierenden Elemente und/oder durch die Lagerung der Antriebswelle analysiert werden.

10. Rotationszerstäuberanordnung nach einem der Ansprüche 8 bis 9, **dadurch gekennzeichnet, dass** die Auswerteeinrichtung einen elektronischen Prozessor enthält.

11. Rotationszerstäuberanordnung nach einem der Ansprüche 8 bis 10, **dadurch gekennzeichnet,**
a) **dass** durch Auswertung der elektrischen Kenngrößen, des Drehmoments und/oder der Drehzahl des Antriebsmotors Eigenschaften des Beschichtungsmaterials analysiert werden, oder
b) **dass** zur Kontrolle der durch ein Luftlager der Antriebswelle fließenden Lagerluft deren Volumenstrom durch Auswertung der Kenngröße, vorzugsweise der Größe und/oder des Verlaufs des Drehmoments und/oder der Drehzahl des Antriebsmotors ermittelt wird, oder
c) **dass** durch Auswertung mindestens einer Kenngröße des Antriebsmotors das Vorhandensein, das Trägheitsmoment, der Werkstoff und/oder der Typ des Absprühelements festgestellt wird, oder
d) **dass** durch die Auswertung des Drehzahlverlaufs oder eines anderen Motorkennwerts die Schaltzeiten eines den Ausfluss des Beschichtungsmaterials aus dem Rotationszerstäuber steuernden Ventils ermittelt werden.

12. Rotationszerstäuberanordnung nach einem der Ansprüche 8 bis 11, **dadurch gekennzeichnet, dass** die negative oder positive Steigung der sich ändernden Kenngröße des Motors und/oder die absolute und/oder relative Größe der Änderung ausgewertet werden.

13. Rotationszerstäuberanordnung nach Anspruch 11, **dadurch gekennzeichnet, dass** zur Kompensation von Änderungen des Ansprechverhaltens des Steuerventils die von dem Steuersystem des Antriebsmotors ermittelten Schaltzeiten mit den durch die Prozesssteuerung vorgegebenen Sollzeiten verglichen werden und Abweichungen der Schaltzeiten korrigiert werden.

14. Rotationszerstäuberanordnung nach einem der Ansprüche 8 bis 13, **dadurch gekennzeichnet, dass** ein durch die Auswertung einer Motorkenngröße festgestellter Fehler korrigiert wird, sobald er einen Grenzwert überschreitet.

15. Rotationszerstäuberanordnung nach einem der Ansprüche 8 bis 14, **dadurch gekennzeichnet,**
a) **dass** zur Stromversorgung des Antriebsmotors und/oder seines Steuersystems und/oder der Auswerteeinrichtung eine Transformatoranordnung (T1) vorgesehen ist, die zwischen ihren Primär- und Sekundärkreisen eine Hochspannungs-Isolationseinrichtung hat, und
b) **dass** Signale der Auswerteeinrichtung und/oder des Steuersystems des Antriebsmotors galvanisch getrennt zwischen einem auf Hochspannungspotenzial liegenden Bereich (1) und einem auf niedrigem oder Erdpotenzial liegenden Bereich übertragen werden, und
c) **dass** mindestens ein Parameter, der während des Beschichtungsbetriebs und/oder während eines Absprühvorgangs und/oder bei Rotation des Absprühelements mit einer Drehzahl von mehr als 3000/min oder mehr als 10000/min oder mehr als 15000/min vorhanden ist, mit der das Absprühelement während des Beschichtungsbetriebs und/oder während eines Absprühvorgangs rotiert, durch Auswertung mindestens einer sich hierbei ergebenden Kenngröße des Antriebsmotors analysiert wird.

## Claims

1. A method for process diagnosis during coating of workpieces with a rotary atomiser, the rotating spraying element of which is driven by a motor (M) with controllable or adjustable rotary speed,
wherein faults in the spraying procedure and/or the drive system of the spraying element are detected, with the following steps:
- use of an electric drive motor (M) for the spraying element with an automatic control system (4); and
- analysis of at least one particular parameter of the spraying procedure and/or of the drive system of the spraying element by evaluating at least one characteristic value of the drive motor,
**characterized in that**
the volume flow rate of the coating material is monitored by evaluating the accelerating and/or braking behaviour of the drive motor.

2. The method according to claim 1, **characterized in that**
a) the size and/or pattern of the current, electrical power, torque, load torque, positive or negative acceleration and/or rotary speed of the driving motor is evaluated as the characteristic value of said motor, and
b) as the process or drive parameters, the loading of the drive system by the spraying element, by the coating material, by imbalance in the rotating elements and/or by the mounting of the drive shaft can be analysed.

3. The method according to any one of the preceding claims, **characterized in that**
a) properties of the coating material are analysed by evaluating the electrical characteristic values, the torque and/or the rotary speed of the drive motor, or
b) for monitoring the bearing air flowing through an air bearing of the drive shaft, the volume flow rate thereof is detected by evaluating the characteristic value, preferably the size and/or shape of the torque and/or the rotary speed of the drive motor, or
c) by evaluating at least one characteristic value of the drive motor, the presence, the moment of inertia, the material and/or the type, of the spraying element is detected, or
d) the at least one characteristic value of the drive motor is evaluated by the electronic control system, or
e) by evaluating the rotary speed pattern or another motor characteristic value, the switching times of a valve controlling the outflow of the coating material from the rotary atomiser are determined.

4. The method according to any one of the preceding claims, **characterized in that** the negative or positive slope of the changing characteristic value of the motor and/or the absolute and/or relative size of the change are evaluated.

5. The method according to any one of the preceding claims, **characterized in that** a fault detected by evaluating a motor characteristic value is corrected as soon as said fault exceeds a limit value.

6. The method according to any one of the preceding claims, **characterized in that** at least one parameter which is present during coating operation and/or during a spraying procedure and/or on rotation of the spraying element at a rotary speed at which the spraying element rotates during coating operation and/or during a spraying procedure is analysed by evaluating at least one characteristic value of the drive motor resulting therein.

7. The method according to any one of the preceding claims, **characterized in that**
a) the rotary speed of the spraying element at which the determination and/or analysis of the at least one parameter is carried out is more than 3000/min or more than 10000/min or more than 15000/min, and
b) the spraying element and/or other constituents or components of the rotary atomiser is at high voltage during determination and/or analysis of the at least one parameter.

8. A rotary atomiser arrangement for coating workpieces, with
a) a rotatably mounted spraying element for the coating material,
b) an electric drive motor (M) for the spraying element and
c) an automatic control system (4) for drive motor (M),
d) wherein an electronic evaluating apparatus contained in the motor control system (4) or connected thereto is provided, with which at least one characteristic value of the drive motor can be evaluated in order to analyse at least one particular parameter of the spraying procedure and/or of the drive system of the spraying element,
**characterized in that**
e) the evaluating apparatus monitors the volume flow rate of the coating material by evaluating the accelerating and/or braking behaviour of the drive motor.

9. The rotary atomiser arrangement according to claim 8,
**characterized in that,**
a) as the characteristic value of the drive motor, the size and/or pattern of the current, the electric power, the torque or load torque, the positive or negative acceleration thereof and/or the rotary speed thereof is evaluated, and
b) as the process or drive parameter, the load on the drive system due to the spraying element, the coating material, imbalance in the rotating elements and/or the mounting of the drive shaft is analysed.

10. The rotary atomiser arrangement according to any one of the claims 8 to 9, **characterized in that** the evaluating device comprises an electronic processor.

11. The rotary atomiser arrangement according to any one of the claims 8 to 10, **characterized in that**
a) by evaluating the electrical characteristic values, the torque and/or the rotary speed of the drive motor, properties of the coating material are analysed, or
b) in order to monitor the bearing air flowing through an air bearing of the drive shaft, the volume flow rate of said bearing air is determined by evaluating the characteristic value, preferably the size and/or shape of the torque and/or the rotary speed of the drive motor, or
c) by evaluating at least one characteristic value of the drive motor, the presence, moment of inertia, material and/or type of the spraying element is detected, or
d) by evaluating the rotary speed pattern or another motor characteristic value, the switching times of a valve controlling the outflow of the coating material from the rotary atomiser are determined.

12. The rotary atomiser arrangement according to any one of the claims 8 to 11, **characterized in that** the negative or positive slope of the changing characteristic value of the motor and/or the absolute and/or relative size of the change are evaluated.

13. The rotary atomiser arrangement according to claim 11, **characterized in that,** in order to compensate for changes in the response behaviour of the control valve, the switching times determined by the control system of the drive motor are compared with the target times predetermined by the process control system and deviations of the switching times are corrected.

14. The rotary atomiser arrangement according to any one of the claims 8 to 13, **characterized in that** a fault detected by the evaluation of a motor characteristic value is corrected as soon as said fault exceeds a limit value.

15. The rotary atomiser arrangement according to any one of the claims 8 to 14, **characterized in that,**
a) in order to supply power to the drive motor and/or the control system thereof and/or the evaluating device, a transformer arrangement (T1) is provided which has a high voltage insulating device between the primary and secondary circuits of said transformer arrangement, and
b) signals from the evaluating device and/or the control system of the drive motor are galvanically separated between a region (1) at high voltage and a region at low voltage or earth voltage, and
c) at least one parameter which is present during coating operation and/or during a spraying procedure and/or during rotation of the spraying element at a rotary speed of more than 3000/min or more than 10000/min or more than 15000/min at which the spraying element rotates during coating operation and/or during a spraying procedure, is analysed by evaluating at least one characteristic value of the drive motor arising therein.

## Revendications

1. Procédé de diagnostic de processus lors du revêtement de pièces avec un pulvérisateur rotatif, dont l'élément de pulvérisation rotatif est entraîné par un moteur (M) avec une vitesse de rotation contrôlable ou réglable,
les erreurs du processus de pulvérisation et/ou du système d'entraînement de l'élément de pulvérisation étant détectées, avec les étapes suivantes :
- utilisation d'un moteur d'entraînement électrique (M) pour l'élément de pulvérisation avec un système de commande automatique (4) ; et
- analyse d'au moins un paramètre déterminé du processus de pulvérisation et/ou du système d'entraînement de l'élément de pulvérisation par l'analyse d'au moins une grandeur caractéristique du moteur d'entraînement,
**caractérisé en ce que**
l'analyse du comportement d'accélération et/ou de freinage du moteur d'entraînement permet de contrôler le débit volumique du matériau de revêtement.

2. Procédé selon la revendication 1, **caractérisé en ce que**
a) en tant que grandeur caractéristique du moteur d'entraînement, la grandeur et/ou révolution de son débit, de sa puissance électrique, de son couple de rotation ou de charge, de son accélération positive ou négative et/ou de sa vitesse de rotation est analysée, et
b) en tant que paramètre de processus ou d'entraînement, la sollicitation du système d'entraînement par le système de pulvérisation, par le matériau de revêtement, par un balourd des éléments rotatifs et/ou par le logement de l'arbre d'entraînement est analysée.

3. Procédé selon l'une des revendications précédentes,
**caractérisé en ce que**
a) l'analyse des grandeurs caractéristiques électriques, du couple et/ou de la vitesse de rotation du moteur d'entraînement permet d'analyser les propriétés du matériau de revêtement, ou
b) pour le contrôle de l'air s'écoulant à travers un coussin d'air de l'arbre d'entraînement, son débit volumique est déterminé par l'analyse de la grandeur caractéristique, de préférence de la grandeur et/ou l'évolution du couple et/ou de la vitesse de rotation du moteur d'entraînement, ou
c) l'analyse d'au moins une grandeur caractéristique du moteur d'entraînement permet de déterminer la présence, le moment d'inertie, le matériau et/ou le type d'élément de pulvérisation, ou
d) l'au moins une grandeur caractéristique du moteur d'entraînement dont le système de commande électronique est analysée, ou
e) l'analyse de l'évolution de la vitesse de rotation ou d'une autre valeur caractéristique du moteur permet de déterminer les temps de commutation d'une soupape contrôlant l'écoulement du matériau de revêtement hors du pulvérisateur rotatif.

4. Procédé selon l'une des revendications précédentes,
**caractérisé en ce que** la pente négative ou positive de la grandeur caractéristique variable du moteur et/ou la grandeur absolue et/ou relative de la variation sont analysées.

5. Procédé selon l'une des revendications précédentes,
**caractérisé en ce qu'**une erreur détectée par l'analyse d'une grandeur caractéristique du moteur est corrigée dès qu'elle dépasse une valeur limite.

6. Procédé selon l'une des revendications précédentes,
**caractérisé en ce qu'**au moins un paramètre, qui est présent pendant un fonctionnement de revêtement et/ou pendant un processus de pulvérisation et/ou lors de la rotation de l'élément de pulvérisation avec une vitesse de rotation, avec laquelle l'élément de pulvérisation tourne lors du fonctionnement de revêtement et/ou pendant un processus de pulvérisation, est analysé par l'analyse d'une grandeur caractéristique du moteur d'entraînement.

7. Procédé selon l'une des revendications précédentes,
**caractérisé en ce que**
a) la vitesse de rotation de l'élément de pulvérisation, à laquelle est effectuée la détermination et/ou l'analyse de l'au moins un paramètre, est supérieure à 3000/min ou supérieure à 10 000/min ou supérieur à 15 000/min, et
b) l'élément de pulvérisation et/ou d'autres composants du pulvérisateur rotatif sont soumis à un potentiel de haute tension lors de la détermination et/ou de l'analyse de l'au moins un paramètre.

8. Dispositif de pulvérisation rotatif pour le revêtement de pièces avec
a) un élément de pulvérisation logé de manière rotative pour le matériau de revêtement,
b) un moteur d'entraînement électrique (M) pour l'élément de pulvérisation et
c) un système de commande automatique (4) pour le moteur d'entraînement,
d) un dispositif d'analyse électronique, contenu dans le système de commande du moteur (4) ou connecté avec celui-ci, est prévu, grâce auquel une grandeur caractéristique du moteur d'entraînement peut être analysée pour l'analyse d'au moins un paramètre déterminé du processus de pulvérisation et/ou du système d'entraînement de l'élément de pulvérisation,
**caractérisé en ce que**
e) le dispositif d'analyse contrôle le débit volumique du matériau de revêtement par l'analyse du comportement d'accélération et/ou de freinage du moteur d'entraînement.

9. Dispositif de pulvérisation rotatif selon la revendication 8, **caractérisé en ce que**
a) en tant que grandeur caractéristique du moteur d'entraînement, la grandeur et/ou révolution de son débit, de sa puissance électrique, de son accélération positive ou négative et/ou de sa vitesse de rotation est analysée, et
b) en tant que paramètre de processus ou d'entraînement, la sollicitation du système d'entraînement par l'élément de pulvérisation, par le matériau de revêtement, par le balourd des éléments rotatifs et/ou par le logement de l'arbre d'entraînement est analysée.

10. Dispositif de pulvérisation rotatif selon l'une des revendications 8 à 9, **caractérisé en ce que** le dispositif d'analyse contient un processeur électronique.

11. Dispositif de pulvérisation rotatif selon l'une des revendications 8 à 10, **caractérisé en ce que**
a) l'analyse des grandeurs caractéristiques électriques, du couple de rotation et/ou de la vitesse de rotation du moteur d'entraînement permet d'analyser les propriétés du matériau de revêtement, ou
b) pour le contrôle de l'air s'écoulant à travers un coussin d'air de l'arbre d'entraînement, son débit volumique est déterminé par l'analyse de la grandeur caractéristique, de préférence de la grandeur et/ou l'évolution du couple et/ou de la vitesse de rotation du moteur d'entraînement, ou
c) l'analyse d'au moins une grandeur caractéristique du moteur d'entraînement permet de déterminer la présence, le moment d'inertie, le matériau et/ou le type d'élément de pulvérisation, ou
d) l'analyse de l'évolution de la vitesse de rotation ou d'une autre valeur caractéristique du moteur permet de déterminer les temps de commutation d'une soupape contrôlant l'écoulement du matériau de revêtement hors du pulvérisateur rotatif.

12. Dispositif de pulvérisation rotatif selon l'une des revendications 8 à 11, **caractérisé en ce que** la pente négative ou positive de la grandeur caractéristique variable du moteur et/ou la grandeur absolue et/ou relative de la variation sont analysées.

13. Dispositif de pulvérisation rotatif selon la revendication 11, **caractérisé en ce que**, pour la compensation des variations de la réactivité de la soupape de commande, les temps de commutation déterminés par le système de commande du moteur d'entraînement sont comparés avec les temps de consigne prédéterminés par la commande du processus et les écarts des temps de commutation sont corrigés.

14. Dispositif de pulvérisation rotatif selon l'une des revendications 8 à 13, **caractérisé en ce qu'**une erreur détectée par l'analyse d'une grandeur caractéristique du moteur est corrigée dès qu'elle dépasse une valeur limite.

15. Dispositif de pulvérisation rotatif selon l'une des revendications 8 à 14, **caractérisé en ce que**
a) pour l'alimentation électrique du moteur d'entraînement et/ou de son système de commande et/ou du dispositif d'analyse, un dispositif de transformateur (T1) est prévu, qui comprend, entre son circuit primaire et son circuit secondaire, un dispositif d'isolation haute tension, et
b) les signaux du dispositif d'analyse et/ou du système de commande du moteur d'entraînement sont transmis de manière séparée galvaniquement entre une zone (1) se trouvant à un potentiel de haute tension et une zone se trouvant à un potentiel faible ou au potentiel de terre, et
c) au moins un paramètre, qui est présent pendant l'opération de revêtement et/ou pendant un processus de pulvérisation et/ou lors de la rotation de l'élément de pulvérisation avec une vitesse de rotation supérieure à 3000/min ou supérieure à 10 000/min ou supérieure à 15 000/min, avec laquelle l'élément de pulvérisation tourner pendant l'opération de revêtement et/ou pendant un processus de pulvérisation, est analysé par l'analyse d'au moins une grandeur caractéristique du moteur d'entraînement.
